(19) Europäisches Patentamt / European Patent Office / Office européen des brevets

(11) **EP 2 926 067 B1**

(12) **EUROPÄISCHE PATENTSCHRIFT**

(45) Veröffentlichungstag und Bekanntmachung des Hinweises auf die Patenterteilung:
**23.06.2021 Patentblatt 2021/25**

(21) Anmeldenummer: **13796072.0**

(22) Anmeldetag: **27.11.2013**

(51) Int Cl.:
*F25D 21/08* (2006.01)  *F28F 17/00* (2006.01)
*F28F 1/14* (2006.01)  *F28F 9/013* (2006.01)
*F28F 9/26* (2006.01)  *F16L 25/02* (2006.01)
*F16L 53/00* (2018.01)

(86) Internationale Anmeldenummer:
**PCT/EP2013/074884**

(87) Internationale Veröffentlichungsnummer:
**WO 2014/083066 (05.06.2014 Gazette 2014/23)**

(54) **WÄRMETAUSCHER**

HEAT EXCHANGER

ÉCHANGEUR DE CHALEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.11.2012 DE 202012011541 U**
**09.07.2013 DE 202013006214 U**

(43) Veröffentlichungstag der Anmeldung:
**07.10.2015 Patentblatt 2015/41**

(73) Patentinhaber: **Bundy Refrigeration International Holding B.V.**
**1097 JB Amsterdam (NL)**

(72) Erfinder:
• **VIKLUND, Bengt**
**S-27456 Abbekas (SE)**
• **KIRCHNER, Jörg**
**99752 Lipprechterode (DE)**

(74) Vertreter: **HWP Intellectual Property**
**Ridlerstraße 35**
**80339 München (DE)**

(56) Entgegenhaltungen:
WO-A1-03/078014     DE-A1- 1 936 931
FR-A- 1 115 104     GB-A- 767 050
GB-A- 790 111     JP-A- 2003 307 349
US-A- 2 428 667     US-A- 2 988 899
US-A- 3 807 776     US-A- 4 985 801
US-A1- 2003 155 099     US-A1- 2011 132 588

• **None**

EP 2 926 067 B1

**Beschreibung**

1. Erfindung

Die vorliegende Erfindung betrifft einen Wärmetauscher für Kühlanlagen, Klimaanlagen oder dergleichen, der mit einer Enteisungsfunktion und einer Isolationshülse ausgestattet ist.

2. Hintergrund der Erfindung

In Kühlanlagen unterschiedlichster Anwendung, wie beispielsweise in Kühlschränken des privaten Bereichs oder der Gastronomiebranche, und in Klimaanlagen werden Wärmetauscher eingesetzt, um die in einer Kühlflüssigkeit gespeicherte Wärme an die Umgebung abzuführen. Derartige Wärmetauscher werden basierend auf unterschiedlichen Konstruktionen hergestellt und sind im Stand der Technik bekannt. Weitere Geräte mit Wärmetauscher sind Luftentfeuchter für Raumluft.

Derartige Wärmetauscher weisen eine Kühlmittelleitung auf, durch die das zu kühlende Kühlmittel fließt. Des Weiteren sind derartige Kühlmittelleitungen mit Konstruktionen verbunden, die die Oberfläche der Kühlmittelleitung für einen verbesserten Wärmeaustausch mit der Umgebung vergrößern. Zu diesen Konstruktionen zählen beispielsweise Lamellen, die in Kaskaden oder fächerartig angeordnet sind.

Während des Betriebs von Kühlgeräten, egal welcher Bauart, erreicht der Wärmetauscher eine Temperatur, die unterhalb des Taupunktes der Umgebungsluft liegen kann. In diesem Fall kondensiert Wasser aus der Umgebungsluft am Wärmetauscher und lagert sich dort ab. Sollte die Temperatur des Wärmetauschers unter 0°C liegen, gefriert das kondensierte Wasser am Wärmetauscher, und es bildet sich an diesem eine Eisreifbildung aus. Diese Eisreifbildung reduziert den Wärmeaustausch zwischen Wärmetauscher und Umgebungsluft, so dass der Wirkungsgrad des Wärmetauschers reduziert wird.

Zu diesem Zweck werden im Stand der Technik Heizungen eingesetzt, die beispielsweise eine Lamellenstruktur des Wärmetauschers erwärmen, um auf diese Weise die ausgebildete Reif- oder Eisschicht vom Wärmetauscher abzutauen. Eine bekannte Alternative zum Abtauen des Wärmetauschers nutzt eine separate Heizschleife, die auf dem Wärmetauscher oder angrenzend an den Wärmetauscher angeordnet ist. Diese Heizschleife ist getrennt vom Kühlkreislauf angeordnet und besteht aus einer elektrischen Heizwendel. Um den Wärmetauscher abzutauen, wird die Heizschleife mit Hilfe eines elektrischen Stroms erwärmt, so dass die Wärme der Heizschleife in Richtung Wärmetauscher abgestrahlt wird.

Derartige Konstruktionen haben den Nachteil, dass ein Großteil der erzeugten Wärme an die Umgebung abgegeben wird. Des Weiteren ist ein derartiger Abtauprozess langwierig, da die erzeugte Wärme nur sehr langsam in die Lamellenstruktur eindringt.

GB 767,050 beschreibt ein Kühlgerät mit einer Enteisungsvorrichtung. Die Enteisung basiert auf der Induktion eines Heizstroms in einer Kühlmittelleitung. Der induzierte Strom erzeugt Wärme in der Kühlmittelleitung, mit deren Hilfe vorhandenes Eis nahe der Kühlmittelleitung abgetaut wird. Zur Induktion des Stroms wird ein Abschnitt der Kühlmittelleitung um einen Eisenkern eines Transformators gewickelt, was konstruktiv aufwändig und mit einem hohen Platzbedarf verbunden ist.

US 2,428,667 offenbart einen Wärmetauscher gemäß dem Oberbegriff von Anspruch 1 und beschreibt einen Kühlschrank mit einem Kühlfach, das eine Kühlmittelleitung aufweist. Die elektrisch leitfähige Kühlmittelleitung umfasst ein erstes und ein zweites Ende. Mit einer elektrischen Niedrigspannung wird intervallweise über mit den Enden der Kühlmittelleitung verbundene Leitungen ein elektrischer Heizstrom in der Kühlmittelleitung erzeugt. Die verwendeten Isolationshülsen der Kühlmittelleitung gewährleisten häufig nicht den gewünschten Isolationseffekt.

Es ist daher die Aufgabe vorliegender Erfindung, eine verbesserte Konstruktion zum Enteisen eines Wärmetauschers, ein Herstellungsverfahren dafür sowie ein geeignetes Enteisungsverfahren bereitzustellen.

3. Zusammenfassung der Erfindung

Die obige Aufgabe wird durch einen Wärmetauscher nach Anspruch 1, ein Gerät nach Anspruch 16, ein Herstellungsverfahren für einen Wärmetauscher nach Anspruch 17 sowie ein Enteisungsverfahren eines Wärmetauschers nach Anspruch 20 gelöst. Vorteilhafte Ausführungsformen vorliegender Erfindung gehen aus der Beschreibung, den Zeichnungen und den anhängenden Ansprüchen hervor.

Vorliegende Erfindung umfasst einen Wärmetauscher für ein Gerät, insbesondere für ein Kühlgerät, der die folgenden Merkmale aufweist: mindestens eine Kühlmittelleitung mit einem ersten und einem zweiten Ende, durch die ein Kühlmittel leitbar ist, und die aus elektrisch leitfähigem Material besteht, mindestens eine Halteklammer, die die Kühlmittelleitung zumindest teilweise unterstützt, und eine elektrische Spannungsquelle, die mit dem ersten und zweiten Ende der Kühlmittelleitung oder mit den Enden mindestens eines Abschnitts der Kühlmittelleitung derart verbindbar ist, dass ein elektrischer Heizstrom in der Kühlmittelleitung fließt, und/oder eine zweite elektrische Spannungsquelle, die mit mindestens einer Spulenanordnung benachbart zu der mindestens einen Kühlmittelleitung verbindbar ist, so dass durch ein Magnetfeld der Spulenanordnung ein elektrischer Heizstrom in der mindestens einen Kühlmittelleitung induzierbar ist, wobei das erste und das zweite Ende der Kühlmittelleitung jeweils über eine Isolationshülse mit einem Kühlmittelkreislauf eines Geräts verbunden sind, um den Kühlmittelkreislauf des Geräts elektrisch von der Kühlmittelleitung zu isolieren. Bekannte Wärmetauscher weisen zumindest eine Kühlmittelleitung auf, die aus elektrisch leitfähigem Material bereitgestellt werden kann. Bereits an dieser Kühlmittelleitung kann sich eine Eisschicht ausbilden, wenn die Feuchtigkeit aus der Umgebungsluft an der Kühlmittelleitung kondensiert und gefriert. Dies ist im speziellen bei Kühlgeräten, wie Kühlschränken und Kühltruhen, der Fall und behindert den Betrieb der Kühlgeräte. Da die Kühlmittelleitung die zentrale Leitung zum Wärmeaustausch, zunächst zur Abfuhr von Wärme aus der Kühlflüssigkeit, ist, eignet sich diese Kühlmittelleitung in gleicher Weise auch zur Zufuhr von Heizleistung, um eine Eisbildung abzutauen. Daher wird mit Hilfe vorliegender Erfindung ein Stromkreis dadurch gebildet, dass an die beiden Enden der Kühlmittelleitung oder an ausgewählte Bereiche/Abschnitte der Kühlmittelleitung unterschiedliche elektrische Potentiale angeschlossen werden, so dass ein elektrischer Stromfluss durch die Kühlmittelleitung erzeugt wird. Dieser elektrische Stromfluss erwärmt das elektrisch leitfähige Material der Kühlmittelleitung, so dass eine sich darauf befindliche Eisschicht direkt durch Erwärmen der Kühlmittelleitung abgetaut wird.

Gemäß einer zweiten Alternative vorliegender Erfindung wird die elektrisch leitende Kühlmittelleitung durch einen in ihr induzierten elektrischen Heizstrom erwärmt. Zu diesem Zweck versorgt eine elektrische Spannungsquelle eine Spulenanordnung, die benachbart zum Wärmetauscher angeordnet ist, mit elektrischer Energie. Durch die elektrische Versorgung der Spulenanordnung erzeugt die Spulenanordnung ein Magnetfeld, das zumindest eine Kühlmittelleitung des Wärmetauschers umgibt. Nach dem bekannten Induktionsgesetz generiert ein sich änderndes Magnetfeld in einem elektrischen Leiter, hier die Kühlmittelleitung beispielsweise bestehend aus Aluminium oder Stahl, einen elektrischen Heizstrom. Über die Stärke und Änderung des Magnetfelds ist der in der Kühlmittelleitung induzierte elektrische Heizstrom gezielt einstellbar, um eine bestimmte Erwärmung der Kühlmittelleitung bzw. eine Abtaufunktion im Wärmetauscher zu erzeugen.

Selbst wenn die Kühlmittelleitung noch zusätzliche Lamellen und/oder andere Strukturen aufweisen sollte, die die Oberfläche des Wärmetauschers für einen verbesserten Wärmeaustausch vergrößern, sind diese zusätzlichen Strukturen auf jeden Fall wärmeleitend mit der Kühlmittelleitung verbunden. Daher wird sich auch die durch den

Stromfluss erzeugte Wärme in der Kühlmittelleitung auf diese zusätzlichen Strukturen, beispielsweise Lamellen oder Flügel, verteilen, so dass auch dort die zugeführte elektrische Wärme zu einem Abtauen der vorhandenen Eisschicht führt. Es ist ebenfalls bevorzugt, die oben beschriebene Heizfunktion auf Kühlmittelleitungen anzuwenden, die keine oberflächenvergrößernde Konstruktionen, wie bspw. Flügel oder Lamellen, aufweisen. Derartige Kühlmittelleitungen werden bevorzugt in Rohrverdampfern oder ähnlichen Konstruktionen eingesetzt, in denen der Wärmetauscher aus einer gebogenen, vorzugsweise spiral- oder schraubenförmig, Rohrleitung besteht.

In Abhängigkeit von der Stärke des elektrischen Stroms durch die Kühlmittelleitung lässt sich auch die Heizleistung der Kühlmittelleitung variieren. Daraus folgt, dass die Stärke der Erwärmung sowie die Zeitspanne für die Erwärmung gezielt auf die vorhandene und abzutauende Eisschicht einstellbar ist. Dies ermöglicht einen energieeffizienten Umgang mit der Enteisungsfunktion des Wärmetauschers.

Erfindungsgemäß bevorzugt besteht die Kühlmittelleitung des Wärmetauschers aus Metall. Dessen mindestens eine Halteklammer ist aus einem elektrisch nicht leitenden Material hergestellt. Zudem ist vorzugsweise die elektrische Spannungsquelle eine Niedervoltspannungsquelle mit Gleich- oder Wechselspannung.

Gemäß einer bevorzugten Ausführungsform des erfindungsgemäßen Wärmetauschers ist dessen Kühlmittelleitung ein Flügelrohr bestehend aus einem Rohr und einer Mehrzahl von sich radial davon erstreckenden Flügeln, vorzugsweise zwei gegenüberliegend zueinander angeordnete Flügel. Die Flügel des Flügelrohrs sind flächig ausgebildet und weisen in Längsrichtung des Flügelrohrs beabstandet zueinander eine Mehrzahl von Durchbrüchen auf.

Mit Hilfe der an sich bekannten Flügelrohre wird die Oberfläche der Kühlmittelleitung vergrößert, um Wärme an die Umgebung abzugeben. Sobald sich Wasser oder Eis auf dem Flügelrohr des Wärmetauschers sammelt, sinkt der Wirkungsgrad des Wärmetauschers. Denn nicht die gesamte Anströmfläche des Flügelrohrs und somit des Wärmetauschers steht für einen Wärmeaustausch mit der Umgebung zur Verfügung. Daher ist es erfindungsgemäß bevorzugt, die Flügel des Flügelrohrs mit einer Mehrzahl von Durchbrüchen zu versehen, durch die Wasser ablaufen kann, dass sich sonst auf dem Flügelrohr sammeln würde. Selbst wenn sich Eis auf den Flügeln sammeln sollte, könnte nach Beginn eines Abtauvorgangs dieses Eises das entstehende Wasser durch diese Durchbrüche ablaufen und/oder abtropfen.

Um eine optimale Wasserabfuhr gewährleisten zu können, weisen die Durchbrüche vorzugsweise eine Querschnittsfläche $A_D$ im Bereich von 2 mm$^2 \leq A_D \leq$ 50 mm$^2$, weiter bevorzugt von 8 mm$^2 \leq A_D \leq$ 32 mm$^2$ und noch mehr bevorzugt von 10 mm$^2 \leq A_D \leq$ 15 mm$^2$, auf. Zudem ist es bevorzugt, die Form der Durchbrüche annähernd rechteckig, elliptisch oder rund zu gestalten. Gemäß einer besonders bevorzugten Ausführungsform vorliegender Erfindung weisen die Durchbrüche die Form eines Langlochs auf dessen kürzere Seiten abgerundet oder gerade verlaufen. Vorzugsweise werden die Durchbrüche und die Flügel gestanzt.

Um das an den Wärmetauscher angeschlossene Gerät, vorzugsweise ein Kühlschrank für den privaten oder gastronomischen Gebrauch oder den Einzelhandel, eine Klimaanlage, ein Luftentfeuchter für Raumluft, vor der elektrischen Spannung der erfindungsgemäßen Heizfunktion des Wärmetauschers zu schützen, indem der Kühlmittelkreislauf des Geräts elektrisch von der Kühlmittelleitung isoliert ist, ist vorzugsweise das erste und das zweite Ende der Kühlmittelleitung jeweils über eine Isolationshülse mit dem Kühlmittelkreislauf des Geräts verbunden. Auf diese Weise wird sichergestellt, dass die elektrischen Schaltungen des Geräts, das mit dem Wärmetauscher verbunden ist, durch den elektrischen Heizstrom zum Enteisen oder Erwärmen des Wärmetauschers nicht beeinflusst werden. Da das Kühlmittel, welches durch die Kühlmittelleitung fließt, nicht elektrisch leitend ist, ist es lediglich erforderlich, die Kühlmittelleitung elektrisch gegenüber dem angeschlossenen Gerät zu isolieren. Es ist nicht erforderlich, das Kühlmittel selbst von der Kühlmittelleitung elektrisch zu isolieren.

Erfmdungsgemäß bevorzugt weist die Isolationshülse des Wärmetauschers einen hohlzylinderförmigen Körper mit zwei gegenüber liegenden Enden auf, die jeweils einen ringförmigen Spalt zum Verbinden von Leitungen umfassen. Gemäß einer bevorzugten Ausführungsform vorliegender Erfindung wird dieser ringförmige Spalt durch eine radiale Innenwand und eine radiale Außenwand der Isolationshülse gebildet. Um die Funktion der Isolationshülse sicherzustellen, besteht der hohlzylindrische Körper der Isolationshülse aus einem elektrisch nicht leitenden Material. Da die Isolationshülse bevorzugt auch zur Verbindung beliebiger Rohrenden einsetzbar ist, ist ebenfalls elektrisch leitendes Material für den hohlzylinderförmigen Körper nutzbar. Da man das Material für den Körper der Isolationshülse gezielt auswählen kann, sind auf diese Weise Rohrleitungen aus unterschiedlichen Materialien und mit unterschiedlichen thermischen und/oder chemischen Belastungen verbindbar. Einerseits wirken sich durch diese Konstruktion der Isolationshülse die Belastungen der Rohrleitungen nicht negativ auf die hergestellte Verbindung aus. Andererseits wird vorzugsweise elektrochemische Korrosion durch die Materialien der verbundenen Rohrleitungen reduziert oder ausgeschlossen. Das Gleich gilt für die Materialwahl der Ringeinsätze (siehe unten).

Der jeweils ringförmige Spalt am ersten und zweiten Ende der Isolationshülse ist vorzugsweise konzentrisch zur Mittelachse der Isolationshülse angeordnet. Dieser ringförmige Spalt ist in radialer Richtung so breit, dass ein Rohrende der Kühlmittelleitung darin einsetzbar und befestigbar ist. Um eine optimale Verbindung zwischen der Isolationshülse und den Rohrenden herstellen zu können, ist der ringförmige Spalt in seiner axialen Tiefe bezogen auf die Mittelachse der Isolationshülse anpassbar, um einen ausreichend langen Bereich des Rohrendes der Kühlmittelleitung aufnehmen zu können.

Gemäß einer weiteren bevorzugten Ausführungsform vorliegender Erfindung umfasst die Isolationshülse mindestens einen Ringeinsatz, der in den ringförmigen Spalt einsetzbar ist, um das Rohrende des ringförmigen Spalts zu halten. Dieser Ringeinsatz ist vorzugsweise in axialer Richtung konisch und/oder stufenförmig ausgebildet. Wird der Ringeinsatz und das Rohrende in den ringförmigen Spalten der Isolationshülse eingesetzt, entsteht dadurch ein Presssitz von Ringeinsatz und Rohrende im ringförmigen Spalt der Isolationshülse. Auf diese Weise ist das Rohrende verlässlich im Wärmetauscher befestigt, wobei vorzugsweise gleichzeitig durch den Presssitz eine flüssigkeitsdichte Verbindung zwischen Wärmetauscher und Gerät erzeugt wird. Es ist ebenfalls bevorzugt, den ringförmigen Spalt mit Klebstoff zu benetzen, um auf diese Weise die Verbindung zwischen Isolationshülse und Rohrende zu verbessern.

Gemäß einer weiteren bevorzugten Ausführungsform des erfindungsgemäßen Wärmetauschers sind mindestens zwei Abschnitte der Kühlmittelleitung elektrisch miteinander verbunden, so dass sich der elektrische Heizstrom entsprechend ausbreiten kann. Auch wenn es sich als vorteilhaft erwiesen hat, die Kühlmittelleitung mit einer möglichst großen Oberfläche bereitzustellen, wird ein Abtauen oder Erwärmen der Kühlmittelleitung ebenfalls durch einen elektrisch leitenden Kontakt zwischen Kühlmittelleitungen oder Abschnitten von Kühlmittelleitungen gefördert. Dies liegt daran, dass eine derartige elektrische Verbindung einen angelegten oder induzierten elektrischen Heizstrom von einem Abschnitt der Kühlmittelleitung auf einen beispielsweise benachbarten Abschnitt der Kühlmittelleitung überträgt. Auf diese Weise wird gewährleistet, dass der elektrische Heizstrom möglichst große Bereiche des Wärmetauschers durchfließt, wodurch die Effektivität der hier realisierten Abtaufunktion gesteigert wird.

Im Hinblick auf die erfindungsgemäße Alternative mit Nutzung einer Spulenanordnung zur Erzeugung eines elektrischen Heizstroms ist es ebenfalls bevorzugt, dass die mindestens eine Spulenanordnung eine ringförmige Struktur aufweist, die mindestens eine Kühlmittelleitung umgibt. Die erfindungsgemäß bevorzugte ringförmige Spulenanordnung hat zur Folge, dass die die ringförmige Struktur durchlaufende Kühlmittelleitung einem starken magnetischen Feld im Inneren der ringförmigen Struktur ausgesetzt ist. Mit Hilfe einer geeignet eingestellten elektrischen Wechselspannung oder einer schaltungstechnisch andersartig realisierten Variation der Stärke des Magnetfelds der ringförmigen Spulenanordnung lassen sich somit gerade im Inneren der ringförmigen Spulenanordnung hohe bzw. effektive elektrische Heizströme induzieren. Alternativ dazu ist es natürlich ebenfalls bevorzugt, mindestens eine Spulenanordnung mit einer flächigen, kurvenförmigen oder einen an die Form des Wärmetauschers angepassten Gestalt einzusetzen, so dass die mindestens eine Spulenanordnung benachbart zum Wärmetauscher, vorzugsweise angrenzend an die mindestens eine Kühlmittelleitung, anordenbar ist. Die Form der Spulenanordnung wird dabei derart gewählt, dass die Spulenanordnung möglichst dicht an der mindestens einen Kühlmittelleitung anordenbar ist und andererseits nicht den Luftstrom durch den Wärmetauscher behindert. Daher ist es bevorzugt, beispielsweise eine oder eine Mehrzahl von flächigen Spulenanordnungen im äußeren Umfangsbereich des Wärmetauschers anzuordnen. Eine weitere alternative Ausführungsform vorliegender Erfindung besteht darin, mehrere Abschnitte der

Kühlmittelleitung des Wärmetauschers mit jeweils einer ringförmigen Spulenanordnung zu umgeben, so dass die jeweilige ringförmige Spulenanordnung einen individuellen elektrischen Heizstrom in jedem entsprechenden Abschnitt der Kühlmittelleitung induziert.

Gemäß einer weiteren bevorzugten Ausführungsform vorliegender Erfindung ist die bereits oben diskutierte mindestens eine Spulenanordnung mit einer elektrischen Steuerung verbunden, über die eine Frequenz einer elektrischen Versorgungsspannung der mindestens einen Spulenanordnung einstellbar ist. Der technische Hintergrund dieser bevorzugten Ausführungsform besteht darin, dass sich in Experimenten gezeigt hat, dass mit zunehmender Frequenz der die mindestens eine Spulenanordnung versorgenden elektrischen Wechselspannung der in der mindestens einen Kühlmittelleitung induzierte elektrische Heizstrom und somit die induzierte elektrische Heizleistung zunimmt. Um diesen Effekt vorteilhaft einzusetzen, ist es daher bevorzugt, entsprechend der vorliegenden Konstruktion des Wärmetauschers und/oder des Materials der Kühlmittelleitung die Frequenz der elektrischen Versorgungsspannung der mindestens einen Spulenanordnung derart einzustellen, dass eine optimale Heiz- bzw. Erwärmungsfunktion des Wärmetauschers realisierbar ist. In diesem Zusammenhang ist es ebenfalls bevorzugt, bei einer Mehrzahl von eingesetzten Spulenanordnungen im Wärmetauscher diese mit dem gleichen oder mit individuellen Wechselspannungen zu versorgen.

Gemäß einer weiteren bevorzugten Ausführungsform vorliegender Erfindung ist die mindestens eine Spulenanordnung mit einer Steuerung verbunden, die einen Timer zur zeitabhängigen Zu- und Abschaltung des Magnetfelds der Spulenanordnung enthält. Mit Hilfe des Timers wird sichergestellt, dass die Abtau- bzw. Erwärmungsfunktion des Wärmetauschers mit Hilfe des induzierten elektrischen Heizstroms zu ganz bestimmten Betriebszeiten oder Betriebszuständen des Wärmetauschers erfolgt. Des Weiteren gewährleistet der Timer, über welchen Zeitraum die Abtaufunktion ihre Wirkung entfaltet. Unabhängig vom Timer ist es ebenfalls bevorzugt, die Abtaufunktion über einen Sensor zu aktivieren, der den Vereisungszustand des Wärmetauschers erfasst. Entsprechend ist die Abtaufunktion auch wieder abschaltbar, wenn ein derartiger Enteisungssensor eine ausreichende Enteisung des Wärmetauschers erfassen konnte.

Zudem umfasst vorliegende Erfindung ein Gerät mit Wärmetauscher gemäß einer der oben beschriebenen Ausführungsformen. Das Gerät ist vorzugsweise ein Kühlgerät, eine Klimaanlage oder ein Trocknungsgerät.

Des Weiteren umfasst vorliegende Erfindung ein Herstellungsverfahren eines erfindungsgemäßen Wärmetauschers mit Heizung, das die folgenden Schritte umfasst: Bereitstellen einer Kühlmittelleitung mit einem ersten und einem zweiten Ende, die aus einem elektrisch leitfähigen Material besteht, Anordnen der Kühlmittelleitung in mindestens einer Halteklammer und Bereitstellen einer elektrischen Verbindung zum ersten und zweiten Ende der Kühlmittelleitung, an die eine zuschaltbare elektrische Spannungsquelle anschließbar ist, so dass ein elektrischer Strom durch die Kühlmittelleitung fließt, und/oder Bereitstellen mindestens einer Spulenanordnung benachbart zu mindestens einer Kühlmittelleitung, die mit einer zweiten zuschaltbaren elektrischen Spannungsquelle verbunden ist. Die konstruktiven Besonderheiten der im Herstellungsverfahren verbauten Komponenten des Wärmetauschers mit Heizung und/oder Spulenanordnung sind oben detailliert beschrieben.

Erfindungsgemäß erfolgt ein Verbinden der Kühlmittelleitung über eine Isolationshülse mit einem Kühlmittelkreislauf eines Geräts, so dass das Gerät elektrisch von der Kühlmittelleitung isoliert ist. Es ist weiterhin bevorzugt, eine Mehrzahl von Spulenanordnungen im Wärmetauscher anzuordnen.

Vorliegende Erfindung umfasst zudem ein Enteisungsverfahren eines Wärmetauschers eines Geräts, wobei der Wärmetauscher ein erfindungsgemäßer Wärmetauscher ist, der eine Kühlmittelleitung aus elektrisch leitendem Material aufweist, wobei das Enteisungsverfahren die folgenden Schritte aufweist: Anlegen einer ersten elektrischen Spannung an ein erstes und ein zweites Ende der Kühlmittelleitung, die elektrisch isoliert ist zum Gerät, so dass ein elektrischer Strom durch die Kühlmittelleitung fließt und die Kühlmittelleitung erwärmt, und Abschalten der ersten elektrischen Spannung nach einer Zeitspanne, so dass die Kühlmittelleitung nicht mehr erwärmt wird, und/oder Anlegen einer zweiten elektrischen Spannung an mindestens eine Spulenanordnung benachbart zu mindestens einer Kühlmittelleitung, so dass ein Magnetfeld der mindestens einen Spulenanordnung einen elektrischen Heizstrom in der mindestens einen Kühlmittelleitung induziert, und Abschalten der zweiten elektrischen Spannung nach einer Zeitspanne, so dass die Kühlmittelleitung nicht mehr erwärmt wird.

Basierend auf der oben beschriebenen Konstruktion lassen sich an die beiden Enden der Kühlmittelleitung oder an die Enden ausgewählter Abschnitte der Kühlmittelleitung unterschiedliche elektrische Potentiale anlegen, so dass ein elektrischer Strom durch die Kühlmittelleitung fließt. Diese unterschiedlichen elektrischen Potentiale können eine Gleich- wie auch eine Wechselspannung sein. Da die Kühlmittelleitung vorzugsweise aus Metall besteht, führt der Stromfluss durch die Kühlmittelleitung zu einer Erwärmung der Kühlmittelleitung. Alternativ oder ergänzend zu dem gerade beschriebenen Enteisungsverfahren ist der elektrische Heizstrom in der Kühlmittelleitung ebenfalls durch die mindestens eine Spulenanordnung benachbart zum Wärmetauscher induzierbar. Dabei ist es bevorzugt, je nach Vereisungsgrad der Wärmetauscher die Stärke des elektrischen Heizstroms zu variieren, indem beispielsweise die Frequenz der die Spulenanordnung versorgenden Wechselspannung verändert wird. Mit zunehmender Frequenz dieser zweiten elektrischen Wechselspannung steigt die Stromstärke des in der Kühlmittelleitung induzierten elektrischen Heizstroms. Des Weiteren ist es bevorzugt, verschiedene Spulenanordnungen im Wärmetauscher mit unterschiedlichen elektrischen Wechselspannungen zu versorgen, um je nach Ort der Spulenanordnung im Wärmetauscher die Enteisungsfunktion an die lokalen Gegebenheiten im Wärmetauscher anzupassen. Es ist ebenfalls bevorzugt, die Enteisungsfunktion mit Hilfe der Verwendung unterschiedlicher Spulenkonstruktionen optimal anzupassen. Gemäß einer weiteren bevorzugten Ausführungsform des vorliegenden Enteisungsverfahrens lässt sich die Stärke des induzierten elektrischen Heizstroms über die Höhe der die jeweilige Spulenanordnung versorgenden elektrischen Wechselspannung einstellen. Denn der induzierte Heizstrom nimmt mit zunehmender Höhe der versorgenden elektrischen Wechselspannung für die Spulenanordnung und daher mit zunehmender Stärke des erzeugten Magnetfelds zu.

Die mit Hilfe des elektrischen Heizstroms erzeugte Wärme taut eine auf der Kühlmittelleitung befindliche Reif- bzw. Eisschicht ab, so dass durch diese Enteisungsfunktion der Wärmetauscher zu seinem ursprünglichen Wirkungsgrad zurückkehrt. Der elektrische Stromfluss durch die Kühlmittelleitung wird vorzugsweise in Abhängigkeit von einer ausgebildeten Reif- oder Eisschicht auf dem Wärmetauscher gestartet. Diese Reifbildung kann mit Hilfe eines Sensors, beispielsweise ein optischer Sensor, erfasst werden. Eine Kontrolleinheit startet dann in Abhängigkeit von einem Signal des Sensors den Stromfluss durch die Kühlmittelleitung, die das Abtauen der Eisschicht zur Folge hat. In gleicher Weise ist es möglich, mit diesem oder einem weiteren Sensor das Ergebnis des Enteisungsvorgangs zu überwachen. Sollte der Sensor ein ausreichendes Abtauen erfasst haben, kann in Abhängigkeit von einem entsprechenden Signal die elektrische Spannung bzw. der Stromfluss in der Kühlmittelleitung abgeschaltet werden.

Daher umfasst das erfindungsgemäße Enteisungsverfahren vorzugsweise die folgenden Schritte: Erfassen einer Vereisung am Wärmetauscher mit Hilfe eines Sensors, Anlegen der elektrischen Spannung an einer Kühlmittelleitung des Wärmetauschers und/oder Erzeugen eines sich ändernden Magnetfelds in mindestens einer Spulenanordnung des Wärmetauschers, nachdem ein bestimmter Vereisungsgrad erreicht ist, so dass ein elektrischer Heizstrom in der Kühlmittelleitung fließt, und Abschalten der elektrischen Spannung und/oder des Magnetfelds, nachdem ein bestimmter Vereisungsgrad unterschritten ist.

Gemäß einer weiteren bevorzugten Ausführungsform wird während der Enteisung des Wärmetauschers die Temperatur des Kühlmittels in der Kühlmittelleitung überwacht. Dadurch wird vorzugsweise ausgeschlossen, dass die Kühlflüssigkeit während des Enteisens des Wärmetauschers, d. h. während der erwärmende elektrische Heizstrom durch die Kühlmittelleitung fließt, überhitzt wird.

## 4. Kurze Beschreibung der begleitenden Zeichnungen

Die bevorzugten Ausführungsformen vorliegender Erfindung werden unter Bezugnahme auf die begleitende Zeichnung näher erläutert. Es zeigen:

Fig. 1 eine schematische perspektivische Ansicht einer bevorzugten Ausführungsform des erfindungsgemäßen Wärmetauschers,

Fig. 2 eine perspektivische Darstellung einer bevorzugten Ausführungsform einer Kühlmittelleitung des Wärmetauschers gemäß Fig. 1,

Fig. 3 eine bevorzugte Ausführungsform vorliegender Erfindung in Form eines Rohrverdampfers

Fig. 4 eine bevorzugte Ausführungsform einer Rohrverbindung mit Isolationshülse,

Fig. 5 eine seitliche Schnittdarstellung der Rohrverbindung gemäß Fig. 3,

Fig. 6 eine vergrößerte Darstellung des eingekreisten Bereichs aus Fig. 4,

Fig. 7 eine perspektivische Explosionsdarstellung der bevorzugten Isolationshülse,

Fig. 8 eine seitliche Darstellung einer bevorzugten Ausführungsform der Isolationshülse,

Fig. 9 eine seitliche Schnittdarstellung der Isolationshülse aus Fig. 7 und

Fig. 10 vereinfachte schematische Darstellung des bevorzugten Wärmetauschers mit einer Spulenanordnung zur Induktion eines elektrischen Heizstroms in der Kühlmittelleitung,

Fig. 11 eine bevorzugte Ausführungsform eines erfindungsgemäßen Flügelrohrs mit Durchbrüchen in den Flügeln und

Fig. 12 eine vergrößerte Darstellung einer bevorzugten Ausführungsform eines Durchbruchs.

5. Detaillierte Beschreibung der bevorzugten Ausführungsformen

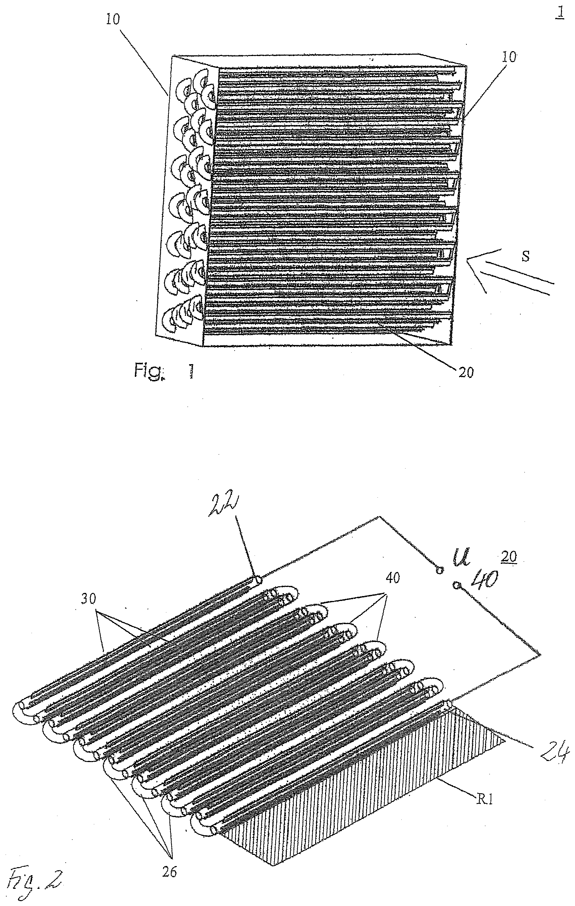

Im Stand der Technik sind Wärmetauscher unterschiedlichster Konstruktion bekannt. Ein bekannter Wärmetauscher 1 ist in Fig. 1 schematisch dargestellt. Dieser Wärmetauscher 1 umfasst zumindest eine Kühlmittelleitung 20, die vorzugsweise serpentinenförmig gebogen ist (siehe Fig. 2). Ein derartiger Wärmetauscher 1, seine Kühlmittelleitung 20 und seine speziellen konstruktiven Merkmale sind im Detail in DE 10 2012 005 513 beschrieben.

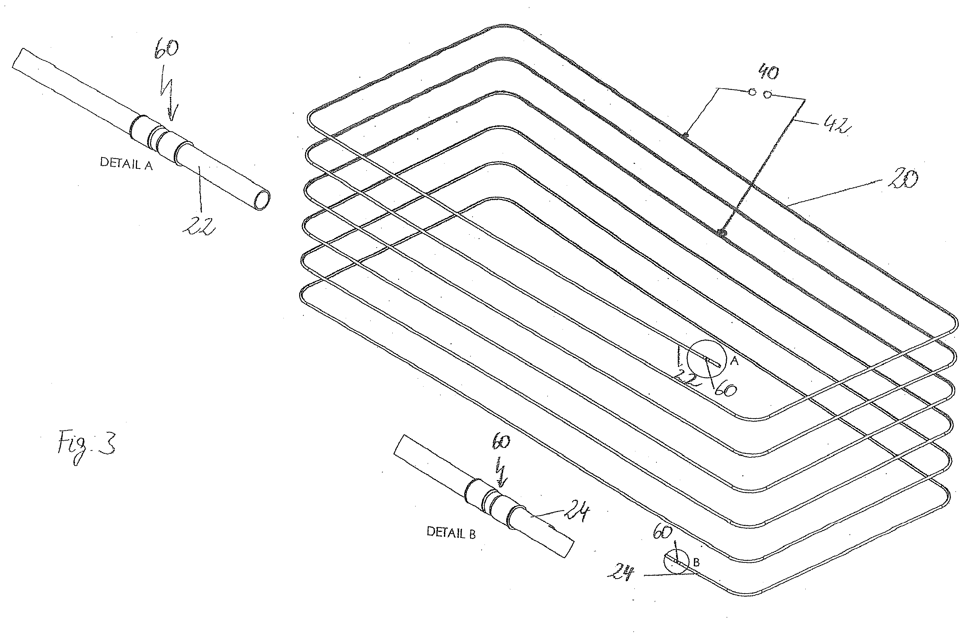

Es sind auch andere Wärmetauscher 1 bevorzugt mit vorliegender Erfindung kombinierbar. Diese Wärmetauscher weisen beispielsweise eine Kühlmittelleitung 20 mit flächenartigen Lamellen (nicht gezeigt), ein kühlmittelleitendes Rohr ohne Oberflächenvergrößerung, wie beispielsweise in einem Rohrverdampfer gemäß Fig. 3, oder andere die Wärmeaustauschfläche der Kühlmittelleitung 20 vergrößernde Konstruktionen auf. Im Weiteren wird vorliegende Erfindung am Beispiel des Wärmetauschers gemäß Fig. 1 und 2 erläutert. Die erläuterten Eigenschaften gelten in gleicher Weise für andere Wärmetauscher, wie die Rohrverdampfer aus Fig. 3.

Die mindestens eine Kühlmittelleitung 20 wird durch einen Luftstrom in einer Strömungsrichtung S angeströmt (siehe Fig. 1), um einen Wärmeaustausch zwischen Kühlmittelleitung und Umgebung zu realisieren.

Die Kühlmittelleitung 20 umfasst vorzugsweise einen Kühlmittelzulauf 22 und einen Kühlmittelablauf 24, so dass eine Kühlflüssigkeit eines Kühlkreislaufs eines Geräts die Kühlmittelleitung 20 durchströmen kann. Zu derartigen Geräten mit Kühlkreislauf (nicht gezeigt) zählen Kühlschränke bzw. -räume in privaten und industriellen Bereichen, Klimaanlagen, Kühlgeräte für Fahrzeuge und Luftentfeuchter, um nur einige Beispiele zu nennen.

Die Kühlmittelleitung 20 ist vorzugsweise in bestimmten Abschnitten als Flügelrohr ausgebildet. Derartige Flügelrohre bestehen aus einem Rohr und zumindest zwei sich radial davon erstreckenden Flügeln. Es ist ebenfalls bevorzugt, dass mehr als zwei Flügel umfänglich verteilt an dem Rohr angeordnet sind.

Gemäß unterschiedlicher bevorzugter Ausführungsformen vorliegender Erfindung sind die Flügel des Flügelrohrs eben oder bogenförmig gewölbt ausgebildet, wie es in DE 10 2012 005 513 und PCT/EP2013/051422 beschrieben ist. Zur Erläuterung der Konstruktion und Funktion von Flügelrohren wird eindeutig auf die Offenbarung der genannten Anmeldungen Bezug genommen.

Wie oben bereits erläutert worden ist, kann sich während des Betriebs von Wärmetauschern 1 eine Eisschicht auf der Kühlmittelleitung 20 ausbilden. Um die Eisschicht zu entfernen, weist der erfindungsgemäße Wärmetauscher 1 eine Heizfunktion auf. Mit Hilfe der Heizfunktion wird die Eisschicht in Wasser umgewandelt. Die Heizfunktion wird durch einen elektrischen Stromfluss direkt in der Kühlmittelleitung 20 realisiert, so dass die Kühlmittelleitung 20 erwärmt und dadurch abgetaut wird. Zu diesem Zweck wird die Kühlmittelleitung 20 aus einem elektrisch leitfähigen Material, wie beispielsweise Stahl, Aluminium oder anderen geeigneten Metallen oder Metalllegierungen, hergestellt.

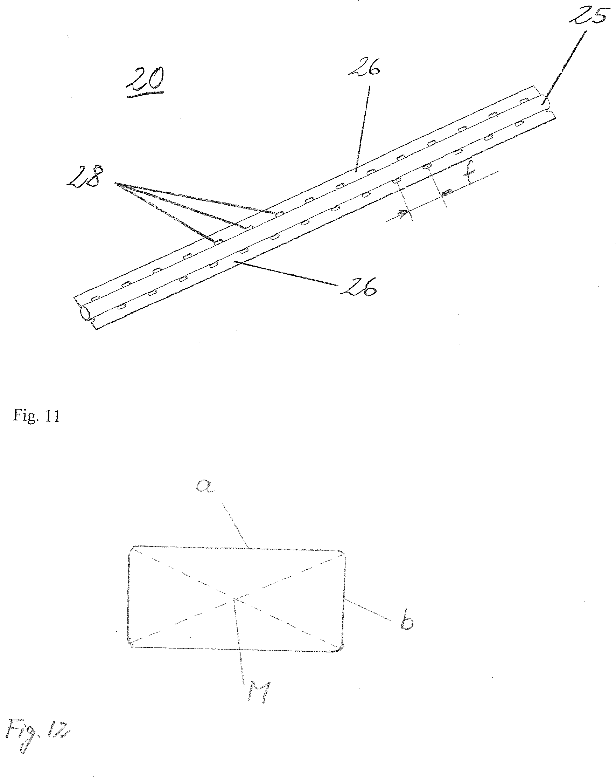

Es hat sich gezeigt, dass das geschmolzene Wasser häufig auf den Flügeln oder am Übergang zwischen Flügel und Rohr haften oder stehen bleibt. Das gleiche gilt natürlich auch für Kondenswasser, das sich auf dem Flügelrohr abscheidet. Dieses Wasser behindert den Wärmeaustausch zwischen dem Wärmetauscher und der Umgebung. Um das Wasser von den Flügelrohren 20 abzuführen, ist eine Mehrzahl von Durchbrüchen 28 an einem Flügel 26, einer Auswahl der Flügel 26 oder an allen Flügeln 26 des Flügelrohrs 20 vorgesehen. Gemäß einer bevorzugten Ausführungsform vorliegender Erfindung sind die Durchbrüche 28 angrenzend an das Rohr 25 angeordnet, wie man in Fig. 11 erkennen kann. Es ist ebenfalls bevorzugt, die Durchbrüche 28 in Radialrichtung des Flügels 26 mittig anzuordnen.

Die Form der Durchbrüche 28 ist bevorzugt ähnlich einem Rechteck oder Langloch, elliptisch, oval, rund, dreieckig oder viereckig. Weist der Durchbruch 28 die Form eines Langlochs auf, sind die kürzen Seiten gerade oder krummlinig ausgeführt. Zudem verläuft die Längsachse des Langlochs parallel zur Längsachse des Flügelrohrs. Darüber hinaus sind auch andere Formen denkbar, solange sie die Abfuhr von Wasser oder Flüssigkeit vom Flügelrohr 20 gewährleisten.

Vorzugsweise weisen die Durchbrüche 28 eine ausreichend große Querschnittsfläche auf, sodass die Oberflächenspannung des Wassers oder einer abzuführenden Flüssigkeit ein Ablaufen durch die Durchbrüche 28 nicht verhindert oder behindert. Die Durchbrüche haben daher eine bevorzugte Querschnittsfläche $A_D$ im Bereich von $2\ mm^2 \leq A_D \leq 50\ mm^2$, weiter bevorzugt von $8\ mm^2 \leq A_D \leq 32\ mm^2$ und noch mehr bevorzugt von $10\ mm^2 \leq A_D \leq 15\ mm^2$. Des Weiteren weisen die Durchbrüche 28 eine Längsseite a, vorzugsweise parallel zur Längsachse des Flügelrohrs, im Bereich $2\ mm \leq a \leq 10\ mm$, weiter bevorzugt $4\ mm \leq a \leq 8\ mm$ und noch mehr bevorzugt $a = 6\ mm$, auf. Die Längsseiten a sind vorzugsweise um den Abstand b voneinander beabstandet, wobei $1\ mm \leq b \leq 5\ mm$, weiter bevorzugt $2\ mm \leq b \leq 4\ mm$ und noch mehr bevorzugt $2,4\ mm \leq b \leq 2,5\ mm$. Es ist weiterhin bevorzugt, die Durchbrüche 28 in einem bestimmten Abstand f zueinander anzuordnen. Dieser Abstand f wird zwischen den Mittelpunkten benachbarter Durchbrüche 28 gemessen. Er befindet sich vorzugsweise in dem Bereich $5\ mm \leq f \leq 40\ mm$, weiter bevorzugt $10\ mm \leq f \leq 30\ mm$, noch mehr bevorzugt im Bereich von $15\ mm \leq f \leq 25\ mm$ und gemäß einer Ausführungsform vorliegender Erfindung ist $f = 20\ mm$.

Das erste Ende 22 und zweite Ende 24 der Kühlmittelleitung 20, die den Kühlmittelzulauf 22 und -ablauf 24 bilden, sind mit einer elektrischen Spannungsquelle 40 verbunden. Es ist ebenfalls erfindungsgemäß bevorzugt, mindestens einen Abschnitt der Kühlmittelleitung 20 zu beheizen. Zu diesem Zweck werden die Enden des mindestens einen Abschnitts der Kühlmittelleitung 20 mit der elektrischen Spannungsquelle verbunden (siehe Fig. 3). Eine derartige Verbindung ist vorzugsweise durch Anklemmen, Ankleben, Anlöten oder Anschweißen der Verbindungsdrähte 42 zur Spannungsquelle 40 an die Kühlmittelleitung 20 realisierbar. Die elektrische Spannungsquelle 40 ist eine Gleich- oder Wechselspannungsquelle. Gemäß einer bevorzugten Ausführungsform vorliegender Erfindung wird eine Niederspannungsquelle im Spannungsbereich von 4 bis 20 V, vorzugsweise 6 bis 12 V, weiter bevorzugt 6 V eingesetzt. Da der Wärmetauscher 1 mit einem Gerät (nicht gezeigt) verbunden ist, das ebenfalls elektrische Schaltungen enthält, lässt sich gerade eine elektrische Niederspannung des Wärmetauschers 1 einfach vom übrigen Gerät isolieren.

Es ist zudem bevorzugt, die elektrische Spannungsquelle 40 entfernt von dem ersten 22 und zweiten Ende 24 der Kühlmittelleitung 20 an der Kühlmittelleitung 20 anzuschließen.

Da die Kühlmittelleitung 20 vorzugsweise in einem Gehäuse des Wärmetauschers 1 angeordnet ist, wie in Fig. 2 gezeigt ist, wird sie seitlich in mindestens einer Halteklammer 10 befestigt. Die Halteklammer 10 weist Öffnungen auf, beispielsweise Langlöcher, in denen die gebogenen Bereiche der Kühlmittelleitung 20 gehalten werden. Um einen elektrischen Kurzschluss zwischen benachbarten Bereichen der Kühlmittelleitung 20 zu vermeiden, besteht die mindestens eine Halteklammer 10 aus einem elektrisch nicht leitenden und temperaturbeständigen Material, vorzugsweise Kunststoff. Auf diese Weise ist gewährleistet, dass der elektrische Heizstrom der Spannungsquelle 40 die vollständige Kühlmittelleitung 20 oder den mindestens einen Abschnitt der Kühlmittelleitung durchfließt und dadurch erwärmt und abtaut.

Nachdem die Kühlmittelleitung 20 in der mindestens einen Halteklammer 10 angeordnet worden ist, wird die Spannungsquelle 40 elektrisch mit dem Kühlmittelzulauf 22 und mit dem Kühlmittelablauf 24 oder mit den Enden des mindestens einen ausgewählten Abschnitts der Kühlmittelleitung 20 verbunden. Sobald ein elektrischer Potentialunterschied zwischen dem Kühlmittelzulauf 22 und dem Kühlmittelablauf 24 oder den beiden Enden anliegt, fließt ein elektrischer Strom durch die Kühlmittelleitung 20, der diese erwärmt und das Eis abtaut.

Zu diesem Zweck ist die Spannungsquelle 40 gezielt zu- und abschaltbar, was vorzugsweise durch eine Steuereinheit (nicht gezeigt) gesteuert wird. Es ist weiterhin bevorzugt, dass die Stromzufuhr der Spannungsquelle 40 variabel ist, da über die Stärke des in der Kühlmittelleitung 20 fließenden Stroms die in der Kühlmittelleitung 20 erzeugte Wärme einstellbar ist.

Das Zu- und Abschalten der Spannungsquelle 40 wird vorzugsweise mit Unterstützung eines Sensors (nicht gezeigt) realisiert. Dieser Sensor, vorzugsweise ein optischer Sensor oder ein Temperatursensor, erfasst die Eis- oder Eisreifbildung auf der Kühlmittelleitung 20. Bei Überschreiten eines einstellbaren Schwellenwerts der Eisbildung wird die Spannungsquelle 40 zugeschaltet, so dass ein eisabtauender Heizstrom durch die Kühlmittelleitung 20 fließt.

Erfasst der Sensor, dass das Eis nach einer bestimmten Zeitspanne ausreichend abgetaut worden ist, oder ist ohne Sensorerfassung eine einstellbare Zeitspanne verstrichen, wird die Spannungsquelle 40 wieder abgeschaltet. Dieser Abschaltvorgang erfolgt daher vorzugsweise basierend auf dem Signal des Sensors oder zeitgesteuert nach Ablauf einer bestimmten Zeitspanne. In Kühlgeräten, wie beispielsweise Kühltruhen oder Kühlschränken, ist es bevorzugt, die Heizfunktion in Abhängigkeit von der Anzahl der Öffnungsvorgänge des gekühlten Raums zu starten.

Dies ist vorzugsweise bei Rohrverdampfern gemäß Fig. 3 der Fall, die in Kühltruhen eingesetzt werden. Durch das direkte Heizen der Kühlmittelleitung 20 des Rohrverdampfers oder von ausgewählten Abschnitten der Kühlmittelleitung 20 ist ein schnelles Enteisen des Rohrverdampfers realisierbar. Gleichzeitig werden separate Heizwendeln oder zeitintensive Abtauphasen für derartige Kühltruhen vermieden.

Es ist ebenfalls bevorzugt, während des Enteisungsvorgangs mittels Heizstrom die Kühlmitteltemperatur zu überwachen. Damit wird ausgeschlossen, dass der Heizstrom das Kühlmittel überhitzt. Vorzugsweise wird dazu ein Temperatursensor (nicht gezeigt) im Kühlmittelstrom angeordnet.

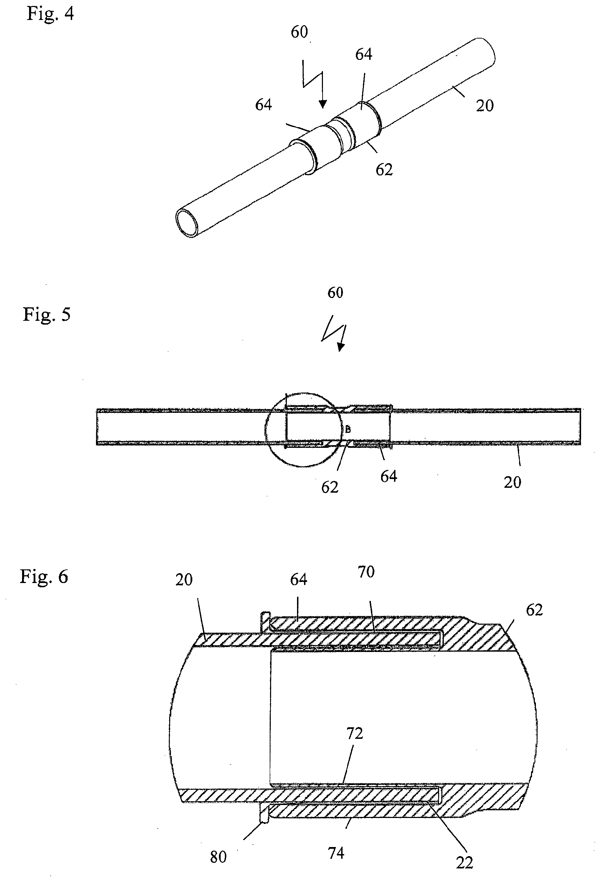

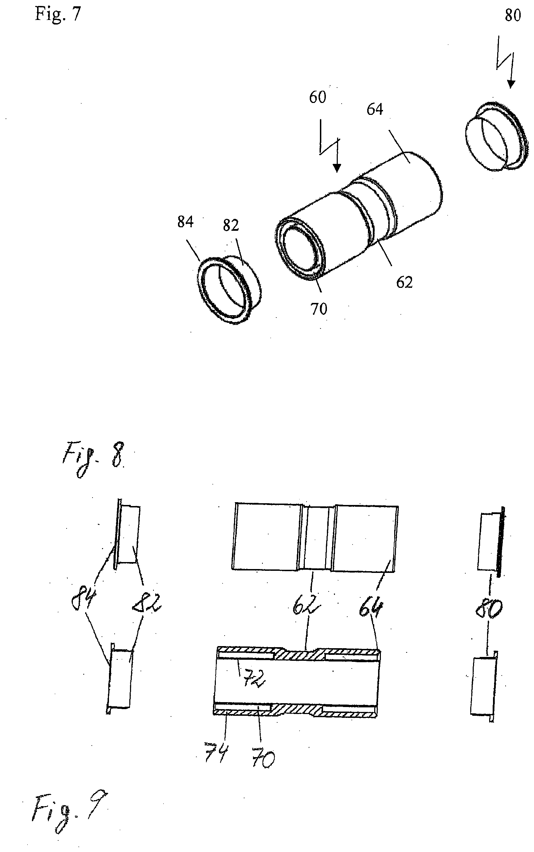

Gemäß der vorliegenden Erfindung ist die Kühlmittelleitung 20 mit Heizfunktion elektrisch isoliert zum Kühlmittelkreislauf eines an den Wärmetauscher 1 angeschlossenen Geräts (nicht gezeigt). Dazu werden beide Ende 22; 24 der Kühlmittelleitung 20 über eine Isolationshülse 60 mit dem Kühlmittelkreislauf des Geräts verbunden (siehe Fig. 4 - 9).

Die Isolationshülse 60 besteht aus einem elektrisch nicht leitenden und temperaturbeständigen Material, vorzugsweise Kunststoff, so dass der in der Kühlmittelleitung 20 fließende Strom nicht den Kühlmittelkreislauf des Geräts erreicht. Eine bevorzugte Ausführungsform der Isolationshülse 60 ist in den Figuren 3 bis 8 veranschaulicht.

Die Isolationshülse 60 umfasst einen hohlzylindrischen Körper 62 mit zwei einander gegenüberliegenden Anschlussenden 64. In axialer Richtung der Isolationshülse 60 erstreckt sich an den Anschlussenden 64 jeweils ein ringförmiger Spalt 70 innerhalb der hohlzylindrischen Wand des Körpers 62. Der ringförmige Spalt 70 wird durch eine radiale Innenwand 72 und eine radiale Außenwand 74 des Körpers 62 begrenzt. Zudem ist dieser ringförmige Spalt 70 in seiner Spaltbreite an eine Wanddicke eines aufzunehmenden Rohrs, vorzugsweise ein Anschlussende der Kühlmittelleitung 20, angepasst, so dass das Anschlussende 22; 24 im ringförmigen Spalt 70 aufnehmbar ist.

Vorzugsweise wird das Anschlussende 22; 24 im ringförmigen Spalt 70 durch Presssitz und/oder Kleben befestigt. Des Weiteren bevorzugt wird die Befestigung bzw. der Halt des Anschlussendes 22; 24 durch einen Ringeinsatz 80 unterstützt. Vor dem Einsetzen des Anschlussendes 22; 24 in den ringförmigen Spalt 70 wird der Ringeinsatz 80 auf das Anschlussende 22; 24 geschoben. Nachdem das Anschlussende 22; 24 in den ringförmigen Spalt 70 eingesetzt worden ist, wird der Ringeinsatz 80 ebenfalls in den ringförmigen Spalt 70 gepresst. Auf Grund seiner Form verstärkt der Ringeinsatz 80 den Presssitz des Anschlussendes 22; 24 im ringförmigen Spalt 70. Vorzugsweise wird durch den Ringeinsatz 80 ein im Spalt 70 vorhandener Klebstoff komprimiert, verteilt und/oder überflüssiger Klebstoff herausgepresst.

Der Ringeinsatz 80 besteht aus einem rohrförmigen Abschnitt 82 und einem umlaufenden Kragen 84, der sich vorzugsweise senkrecht zur Längsachse des Ringeinsatzes 80 erstreckt. Der umlaufende Kragen 84 stützt sich im eingebauten Zustand am Körper 62 der Isolationshülse 60 ab, so dass der Ringeinsatz 80 nicht vollständig in den ringförmigen Spalt 70 gedrückt werden kann.

Vorzugsweise verjüngt sich der ringförmige Abschnitt 82 an seiner radialen Außenseite konisch oder stufenförmig in Richtung seines dem Kragen 84 abgewandten Endes. Dadurch erhält der rohrförmige Abschnitt 82 eine keilähnliche Form, die den Ringeinsatz 80 zusammen mit dem Anschlussende 22; 24 im ringförmigen Spalt 70 fest verankert.

Der Ringeinsatz 80 besteht aus dem gleichen oder einem ähnlichen Material wie der Körper 62 der Isolationshülse 60. Es ist ebenfalls bevorzugt, den Körper 62 der Isolationshülse 60 aus einem durchstrahlbaren Kunststoff herzustellen, so dass beispielsweise ein lichtaktivierbarer Klebstoff zum Einkleben eines Anschlussendes 22; 24 im ringförmigen Spalt 70 verwendet werden kann. Gemäß einer weiteren bevorzugten Ausführungsform wird ein Klebstoff verwendet, der mittels Wärme ausgehärtet wird.

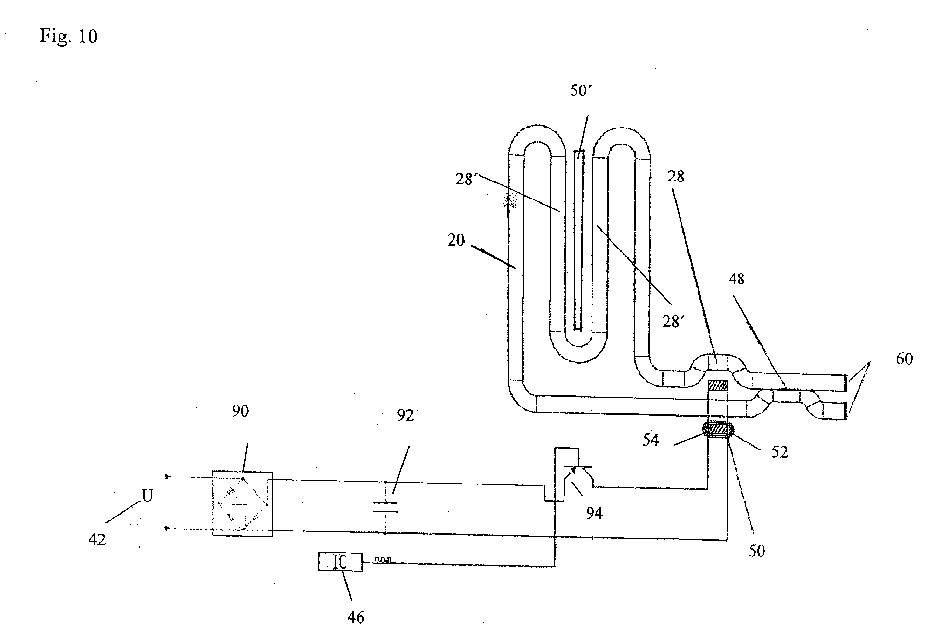

Fig. 10 zeigt eine schematische Darstellung einer weiteren bevorzugten Ausführungsform des erfindungsgemäßen Wärmetauschers. Der Wärmetauscher weist die gleichen oder eine Auswahl der konstruktiven Merkmale auf, wie sie bereits oben bei der Diskussion des Wärmetauschers der Fig. 1 bis 9 beschrieben worden sind. Im Unterschied zum oben beschriebenen Wärmetauscher umfasst der Wärmetauscher der Fig. 10 eine Aufwärm- oder Abtauvorrichtung, die auf dem Prinzip der elektromagnetischen Induktion basiert. Mittels elektromagnetischer Induktion kann die Erwärmung von elektrisch leitenden Werkstoffen erfolgen. Dazu wird mit Hilfe einer elektrischen Wechselspannung und einem entsprechenden elektrischen Wechselstrom durch eine Induktionsspule ein sich änderndes Magnetfeld erzeugt. Das zu erwärmende Werkstück aus einem elektrisch leitenden Material wird in dem sich ändernden Magnetfeld positioniert. Da dieses Magnetfeld der Spule den Luftspalt zu dem benachbart angeordneten Werkstück überwindet, kann das sich ändernde Magnetfeld in das elektrisch leitende Werkstück einkoppeln. Aus diesem Grund wird durch das Magnetfeld im Werkstück eine elektrische Spannung induziert, die einen elektrischen Stromfluss, im Speziellen einen Wirbelstrom, im Bereich des anliegenden Magnetfelds bewirkt.

Die auf dem Prinzip der elektromagnetischen Induktion aufbauende Auf- oder Abtauvorrichtung wird vorzugsweise allein oder in Kombination mit der bereits oben beschriebenen Aufwärm- oder Abtauvorrichtung in dem Wärmetauscher eingesetzt.

Erfindungsgemäß umfasst die Abtauvorrichtung eine Spannungsquelle 42, die mit einer Spulenanordnung 50 elektrisch verbunden ist. Unter einer Spulenanordnung 50, die das bereits oben angesprochene Magnetfeld erzeugt, wird eine beliebig geformte Struktur verstanden, die eine Mehrzahl von Drahtwicklungen 54 aufweist. Sobald an die Drahtwicklung 54 eine elektrische Spannung U angelegt wird, baut sich um die Spulenanordnung 50 ein Magnetfeld (nicht gezeigt) auf. Die Spulenanordnung 50 hat vorzugsweise eine ringförmige Struktur, in deren Inneren ein Eisenkern 52 zur Verstärkung des Magnetfelds angeordnet ist. Gemäß einer anderen bevorzugten Ausführungsform vorliegender Erfindung umgibt die ringförmige Spulenanordnung 50 die Kühlmittelleitung 20.

Um die Spulenanordnung 50 benachbart oder in der näheren Umgebung der Kühlmittelleitung 20 anordnen zu können, ist sie flächig oder kurvenförmig oder in ihrer Gestalt angepasst an den Wärmetauscher ausgebildet.

Die Spulenanordnung 50, vorzugsweise eine Mehrzahl von im Wärmetauscher verteilt angeordnete Spulenanordnungen 50, wird über die Spannungsquelle 42 mit der elektrischen Spannung U versorgt. Die Spannungsquelle 42 stellt eine Wechselspannung U bereit, die der Spulenanordnung 50 direkt zugeführt wird. Gemäß einer anderen Ausführungsform vorliegender Erfindung wird die Wechselspannung U über einen Gleichrichter 90 gleichgerichtet und nachfolgend mit Hilfe einer elektrischen Steuerung 46 für einen optimalen Betrieb der Spulenanordnung 50 verändert. Zu diesem Zweck enthält die Steuerung 46 vorzugsweise einen Frequenzgenerator, um die Frequenz der Spannung U beliebig einstellen zu können. Der Frequenzgenerator erzeugt Frequenzen der elektrischen Wechselspannung U im Bereich von 50 Hz bis 10 MHz, vorzugsweise 50 Hz bis 100 kHz. Zum Schalten der Ströme, die die Spulenanordnung 50 durchfließen, wird vorzugsweise ein Leistungsschalter, beispielsweise ein Transistor, verwendet.

Sobald über die Spannungsquelle 42 und die Steuerung 46 eine Wechselspannung U an der mindestens einen Spulenanordnung 50 anliegt, erzeugt die Wechselspannung U ein sich entsprechend der Frequenz der Wechselspannung U ständig änderndes Magnetfeld. Das Magnetfeld umgibt die Spulenanordnung 50 und den benachbart dazu angeordneten Abschnitt 28 der Kühlmittelleitung 20. Da die Kühlmittelleitung 20 aus elektrisch leitendem Material besteht, wie beispielsweise Aluminium oder Stahl, induziert das sich ändernde Magnetfeld im Abschnitt 28 der Kühlmittelleitung 20 einen elektrischen Heizstrom. Dieser elektrische Heizstrom wird auch als Wirbelstrom bezeichnet. Der elektrische Heizstrom fließt durch die Kühlmittelleitung 20 und erwärmt auf diese Weise die Kühlmittelleitung 20, wie oben beschrieben worden ist.

Um den magnetisch induzierten elektrischen Heizstrom in der Kühlmittelleitung 20 besser verteilen und daher besser ausnutzen zu können, ist vorzugsweise mindestens ein elektrisch verbindender Bereich 48 vorgesehen. Der Bereich 48 stellt eine elektrische Verbindung zwischen benachbarten Abschnitten der Kühlmittelleitung 20 her, wodurch der induzierte elektrische Heizstrom oder zumindest eine in diesem Bereich der Kühlmittelleitung erzeugte Wärme auch in zur Spulenanordnung 50 benachbarte Bereiche der Kühlmittelleitung 20 fließen kann.

Um das Magnetfeld der Spulenanordnung 50 auf große Bereiche der Kühlmittelleitung 20 einwirken zu lassen, werden vorzugsweise flächige Spulenanordnungen 50' genutzt. Das wechselnde Magnetfeld der Spulenanordnung 50' deckt vorzugsweise langgestreckte Abschnitte 28' der Kühlmittelleitung 20 ab, so dass dort elektrische Heizströme induziert werden. In diesem Zusammenhang sind alle beliebigen Formen von Spulenanordnungen 50 bevorzugt, die eine effektive Induktion des elektrischen Heizstroms in großen Bereichen der Kühlmittelleitung 20, und/oder in mehreren nebeneinander angeordneten Kühlmittelleitungen 20 ermöglichen.

Mit der unten stehenden Gleichung (1) ist vorzugsweise eine durch den elektrisch induzierten Heizstrom erreichbare Leistung näherungsweise ermittelbar. Dabei ist $K_{ind}$ ein Faktor zur Beschreibung des Wirkungsgrads der induktiven Leistungsübertragung und abhängig von der Gestalt der Spulenanordnung 50. Die Gleichung (2) stellt vorzugsweise eine Abhängigkeit der Eindringtiefe $\delta$ des elektrischen Heizstroms in die Kühlmittelleitung 20 von den Materialeigenschaften des Materials der Kühlmittelleitung 20 und der Frequenz f des Wechselstroms und der Wechselspannung U in der Spulenanordnung 50 dar. Zu den genannten Materialeigenschaften zählen die relative Permeabilität $\mu_r$ und der spezifische Widerstand $\rho$.

$$P_{ind} = K_{ind} \cdot i^2 \cdot \sqrt{\mu_r \cdot \mu_0 \cdot \rho \cdot f} \qquad (1)$$

$$\delta = 503 \cdot \sqrt{\frac{\rho}{\mu_r \cdot f}} \qquad (2)$$

Anhand von Untersuchungen hat sich gezeigt, dass mit zunehmender Frequenz der die Spulenanordnung 50 versorgenden elektrischen Wechselspannung U die elektromagnetische Leistungseinbringung in die Kühlmittelleitung 20 zunimmt. Beispielgebend zeigt die folgende Tabelle erreichbare elektromagnetische Leistungswerte für eine Kühlmittelleitung 20 aus Aluminium und aus Stahl. Die in der Tabelle gezeigten Ergebnisse heben hervor, dass vorteilhafter Weise eine hochfrequente Wechselspannung zur Versorgung der Spulenanordnung 50 genutzt werden sollte. Eine derart hochfrequente Wechselspannung U lässt sich mit dem bereits oben genannten Frequenzgenerator als Bestandteil der Steuerung 46 erzielen.

| Variante | $K_{ind}$ [1] | Strom i [A] | rel. Permeabilität $\mu_r$ [1] | spez. el Widerstand [(mm²/m)] | Frequenz f [Hz] | Leistung $P_{ind}$ [W] |
|---|---|---|---|---|---|---|
| Al 50 Hz | 1 | 5 | 1 | 0,0265 | 50 | 0,032 |
| Al 1 kHz | 1 | 5 | 1 | 0,0265 | 1000 | 0,144 |
| Al 100 kHz | 1 | 5 | 1 | 0,0265 | 100000 | 1,443 |
| St 50 Hz | 1 | 5 | 1000 | 0,1 | 50 | 1,982 |
| St 1 kHz | 1 | 5 | 1000 | 0,1 | 1000 | 8,862 |
| St 100 kHz | 1 | 5 | 1000 | 0,1 | 100000 | 88,623 |

In der obigen Tabelle beschreibt die erste Spalte das Material der Kühlmittelleitung sowie die Frequenz der genutzten elektrischen Wechselspannung. Die Abkürzung Al hebt hervor, dass die Kühlmittelleitung 20 aus Aluminium besteht. Die Abkürzung St zeigt an, dass die Kühlmittelleitung aus Stahl besteht. Die Angabe 50 Hz, 1 kHz usw. zeigen an, dass eine elektrische Wechselspannung U mit einer Frequenz von 50 Hz oder 1 kHz genutzt worden ist. Die Frequenzen sind nochmals in der Spalte "Frequenz f" genannt. Des Weiteren listet die Tabelle die vorzugsweise genutzten Stromstärken sowie verschiedene Materialeigenschaften auf. In der rechten

Spalte der Tabelle findet man dann die elektromagnetische Leistung, die mit Hilfe der Spulenanordnung 50 vorzugsweise in der Kühlmittelleitung 20 induziert werden konnte.

Es ist ebenfalls bevorzugt, dass die Steuerung 46 einen Zeitschalter oder Timer enthält, mit dem das Magnetfeld der Spulenanordnung 50 gezielt zu- und abschaltbar ist.

**Patentansprüche**

1. Wärmetauscher (1) für ein Gerät, der die folgenden Merkmale aufweist:

    a. mindestens eine Kühlmittelleitung (20) mit einem ersten (22) und einem zweiten Ende (24), durch die ein Kühlmittel leitbar ist und die aus elektrisch leitfähigem Material besteht,
    b. mindestens eine Halteklammer, die die Kühlmittelleitung (20) zumindest teilweise unterstützt, und
    c1. eine erste elektrische Spannungsquelle (40), die mit dem ersten (22) und zweiten Ende (24) der Kühlmittelleitung oder mit den Enden mindestens eines ausgewählten Abschnitts der Kühlmittelleitung (20) derart verbindbar ist, dass ein elektrischer Heizstrom in der Kühlmittelleitung (20) fließt, und/oder
    c2. eine zweite elektrische Spannungsquelle (42), die mit mindestens einer Spulenanordnung (50) benachbart zu der mindestens einen Kühlmittelleitung (20) verbindbar ist, so dass durch ein Magnetfeld der Spulenanordnung (50) ein elektrischer Heizstrom in der mindestens einen Kühlmittelleitung (20) induzierbar ist, **dadurch gekennzeichnet, dass**
    d. das erste (22) und das zweite Ende (24) der Kühlmittelleitung (20) jeweils über eine Isolationshülse (60) mit einem Kühlmittelkreislauf eines Geräts verbunden sind, um den Kühlmittelkreislauf des Geräts elektrisch von der Kühlmittelleitung (20) zu isolieren.

2. Wärmetauscher (1) nach Anspruch 1, **dadurch gekennzeichnet, dass** dessen Kühlmittelleitung (20) aus Metall und dessen mindestens eine Halteklammer (60) aus einem elektrisch nicht leitenden Material besteht.

3. Wärmetauscher (1) nach einem der vorhergehenden Ansprüche, **dadurch gekennzeichnet, dass** dessen elektrische Spannungsquelle (40) eine Niedervoltspannungsquelle mit Gleich- oder Wechselspannung ist.

4. Wärmetauscher (1) nach einem der vorhergehenden Ansprüche, **dadurch gekennzeichnet, dass** dessen Isolationshülse (60) einen hohlzylinderförmigen Körper (62) mit zwei gegenüberliegenden Enden (64) aufweist, die jeweils einen ringförmigen Spalt (70) zum Verbinden von Leitungen umfassen.

5. Wärmetauscher (1) nach Anspruch 4, **dadurch gekennzeichnet, dass** der ringförmige Spalt (70) durch eine radiale Innenwand (72) und eine radiale Außenwand (74) der Isolationshülse (60) gebildet wird.

6. Wärmetauscher (1) gemäß Anspruch 1, **dadurch gekennzeichnet, dass** mindestens zwei Abschnitte der Kühlmittelleitung (20) elektrisch miteinander verbunden sind, so dass sich der elektrische Heizstrom entsprechend ausbreiten kann.

7. Wärmetauscher (1) nach Anspruch 1, **dadurch gekennzeichnet, dass** die mindestens eine Spulenanordnung (50) eine ringförmige Struktur aufweist, die mindestens eine Kühlmittelleitung (20) umgibt.

8. Wärmetauscher (1) gemäß Anspruch 1, **dadurch gekennzeichnet, dass** die mindestens eine Spulenanordnung (50) eine flächige, kurvenförmige oder eine an eine Form des Wärmetauschers angepasste Gestalt aufweist, so dass die mindestens eine Spulenanordnung benachbart zum Wärmetauscher (1) anordenbar ist.

9. Wärmetauscher (1) gemäß Anspruch 1, **dadurch gekennzeichnet, dass** die mindestens eine Spulenanordnung (50) mit einer Steuerung (46) verbunden ist, über die eine Frequenz einer elektrischen Versorgungsspannung der mindestens einen Spulenanordnung (50) einstellbar ist.

10. Wärmetauscher (1) gemäß Anspruch 1, **dadurch gekennzeichnet, dass** die mindestens eine Spulenanordnung (50) mit einer Steuerung (46) verbunden ist, die einen Timer zur zeitabhängigen Zu- und Abschaltung eines Magnetfelds der Spulenanordnung (50) enthält.

11. Wärmetauscher (1) gemäß Anspruch 1, **dadurch gekennzeichnet, dass** dessen Kühlmittelleitung (20) ein Flügelrohr bestehend aus einem Rohr (25) und einer Mehrzahl von sich radial davon erstreckenden Flügeln (26) umfasst, wobei die Flügel (26) flächig ausgebildet sind und in Längsrichtung des Flügelrohrs (20) beabstandet zueinander eine Mehrzahl von Durchbrüchen (28) aufweist.

12. Wärmetauscher (1) gemäß Anspruch 11, **dadurch gekennzeichnet, dass** die Durchbrüche (28) eine Querschnittsfläche $A_D$ im Bereich von 2 mm$^2$≤$A_D$≤50 mm$^2$, vorzugsweise von 8 mm$^2$≤$A_D$≤32 mm$^2$, aufweisen.

13. Wärmetauscher (1) gemäß Anspruch 11 oder 12, **dadurch gekennzeichnet, dass** die Durchbrüche (28) in einem Abstand f von 5 mm≤f≤40 mm, bevorzugt 10 mm≤f≤30 mm, in Längsrichtung des Flügelrohrs (20) voneinander beabstandet sind.

14. Wärmetauscher (1) gemäß einem der Ansprüche 11 bis 13, **dadurch gekennzeichnet, dass** die Durchbrüche (28) annähernd rechteckig, elliptisch oder rund ausgebildet sind.

15. Wärmetauscher (1) gemäß einem der Ansprüche 11 bis 14, **dadurch gekennzeichnet, dass** das Flügelrohr (20), insbesondere vollständig, aus Aluminium besteht.

16. Gerät, insbesondere ein Kühlgerät, eine Klimaanlage oder ein Luftentfeuchter, mit einem Wärmetauscher gemäß einem der vorhergehenden Ansprüche.

17. Herstellungsverfahren eines Wärmetauschers (1) gemäß Anspruch 1 mit Heizung, das die folgenden Schritte umfasst:

a. Bereitstellen einer Kühlmittelleitung (20) mit einem ersten (22) und einem zweiten Ende (24), die aus einem elektrisch leitfähigen Material besteht,

b. Anordnen der Kühlmittelleitung (20) in mindestens einer Halteklammer,

c. Bereitstellen einer elektrischen Verbindung zum ersten (22) und zweiten Ende (24) der Kühlmittelleitung (20) oder zu den Enden mindestens eines Abschnitts der Kühlmittelleitung (20), an die eine erste zuschaltbare elektrische Spannungsquelle (40) anschließbar ist, so dass ein elektrischer Strom durch die Kühlmittelleitung (20) fließt, und/oder

d. Bereitstellen mindestens einer Spulenanordnung (50) benachbart zu mindestens einer Kühlmittelleitung (20), die mit einer zweiten zuschaltbaren elektrischen Spannungsquelle (42) verbunden ist, **gekennzeichnet durch** den weiteren Schritt

e. Verbinden der Kühlmittelleitung (20) über eine Isolationshülse (60) mit einem Kühlmittelkreislauf eines Geräts, so dass das Gerät elektrisch von der Kühlmittelleitung (20) isoliert ist.

18. Herstellungsverfahren nach Anspruch 17, **dadurch gekennzeichnet, dass** eine Mehrzahl von Spulenanordnungen (50) im Wärmetauscher (1) angeordnet ist.

19. Herstellungsverfahren nach Anspruch 17 **gekennzeichnet durch** den weiteren Schritt:
Vorsehen von einer Mehrzahl von Durchbrüchen (28) in mindestens einem Flügel (26) des Flügelrohrs (20), durch die Flüssigkeit ablaufen kann.

20. Enteisungsverfahren eines Wärmetauschers (1) eines Geräts, wobei der Wärmetauscher (1) ein Wärmetauscher (1) gemäß Anspruch 1 ist, der eine Kühlmittelleitung (20) aus elektrisch leitendem Material aufweist, wobei das Enteisungsverfahren die folgenden Schritte aufweist:

a. Anlegen einer ersten elektrischen Spannung an ein erstes (22) und ein zweites Ende (24) der Kühlmittelleitung (20), wobei das erste (22) und das zweite Ende (24) der Kühlmittelleitung (20) jeweils über eine Isolationshülse (60) mit einem Kühlmittelkreislauf eines Geräts verbunden sind, um den Kühlmittelkreislauf des Geräts elektrisch von der Kühlmittelleitung (20) zu isolieren, so dass ein elektrischer Strom durch die Kühlmittelleitung (20) fließt und die Kühlmittelleitung erwärmt, und

b. Abschalten der elektrischen Spannung nach einer Zeitspanne, so dass die Kühlmittelleitung (20) nicht mehr erwärmt wird, und/oder

a'. Anlegen einer zweiten elektrischen Spannung an mindestens eine Spulenanordnung (50) benachbart zu mindestens einer Kühlmittelleitung (20), so dass ein Magnetfeld der mindestens einen Spulenanordnung (50) einen elektrischen Heizstrom in der mindestens einen Kühlmittelleitung (20) induziert, und

b'. Abschalten der elektrischen Spannung nach einer Zeitspanne, so dass die Kühlmittelleitung (20) nicht mehr erwärmt wird.

**21.** Enteisungsverfahren nach Anspruch 20, mit dem weiteren Schritt:

Erfassen einer Vereisung am Wärmetauscher (1) mit Hilfe eines Sensors,
Anlegen der elektrischen Spannung, nachdem ein bestimmter Vereisungsgrad erreicht ist, und
Abschalten der elektrischen Spannung nach Ablauf einer bestimmten Zeitspanne, oder nachdem ein bestimmter Vereisungsgrad unterschritten ist.

**22.** Enteisungsverfahren nach den Ansprüchen 20 oder 21, mit dem weiteren Schritt:
thermische Überwachung der Kühlmitteltemperatur während der Erwärmung der Kühlmittelleitung (20), um eine Überhitzung des Kühlmittels zu vermeiden.

**Claims**

**1.** Heat exchanger (1) for a device, comprising the following features:

a. at least one coolant conduit (20) having a first (22) and a second end (24) through which a coolant is guidable and which consists of electrically conductive material,
b. at least one retaining clamp, which at least partially supports the coolant conduit (20), and
c1. a first electric voltage source (40) which is connectable to the first (22) and second end (24) of the coolant conduit or to the ends of at least a selected section of the coolant conduit (20) so that an electrical heating current flows in the coolant conduit (20), and/or
c2. a second electric voltage source (42) which is connectable to at least one coil arrangement (50) adjacent to the at least one coolant conduit (20) so that an electrical heating current is inducible in the at least one coolant conduit (20) by a magnetic field of the coil arrangement (50), **characterized in that**
d. the first (22) and the second end (24) of the coolant conduit (20) are each connected by means of an insulating sleeve (60) with a coolant circuit of a device to insulate the coolant circuit of the device electrically from the coolant conduit (20).

**2.** Heat exchanger (1) according to claim 1, **characterized in that** its coolant conduit (20) is made of metal and its at least one retaining clamp (60) is made of an electrically non-conductive material.

**3.** Heat exchanger (1) according to one of the preceding claims, **characterized in that** its electric voltage source (40) is a low voltage source with direct or alternating voltage.

**4.** Heat exchanger (1) according to one of the preceding claims, **characterized in that** its insulating sleeve (60) comprises a hollow cylindrical body (62) with two opposite ends (64) each comprising an annular gap (70) for the connecting of conduits.

**5.** Heat exchanger (1) according to claim 4, **characterized in that** the annular gap (70) is formed by a radial inner wall (72) and a radial outer wall (74) of the insulating sleeve (60).

**6.** Heat exchanger (1) according to claim 1, **characterized in that** at least two sections of the coolant conduit (20) are connected with each other electrically so that the electrical heating current is spreadable accordingly.

**7.** Heat exchanger (1) according to claim 1, **characterized in that** the at least one coil arrangement (50) has an annular structure surrounding at least one coolant conduit (20).

**8.** Heat exchanger (1) according to claim 1, **characterized in that** the at least one coil arrangement (50) has a flat, curved or a shape adapted to the form of the heat exchanger such that the at least one coil arrangement is arrangeable adjacent to the heat exchanger (1).

**9.** Heat exchanger (1) according to claim 1, **characterized in that** the at least one coil arrangement (50) is connected to a controller (46), by means of which a frequency of an electrical supply voltage of the at least one coil arrangement (50) is adjustable.

**10.** Heat exchanger (1) according to claim 1, **characterized in that** the at least one coil arrangement (50) is connected to a controller (46), which includes a timer for time-dependent activation and deactivation of a magnetic field of the coil arrangement (50).

11. Heat exchanger (1) according to claim 1, **characterized in that** its coolant conduit (20) is a wing tube consisting of a tube (25) and a plurality of wings (26) extending radially therefrom, wherein the wings (26) are formed planar and have in the longitudinal direction of the wing tube (20) spaced apart to each other a plurality of openings (28).

12. Heat exchanger (1) according to claim 11, **characterized in that** its openings (28) have a cross-sectional area $A_D$ in the range of 2 mm$^2$ ≤ $A_D$ ≤ 50 mm$^2$, preferably of 8 mm$^2$ ≤ $A_D$ ≤ 32 mm$^2$.

13. Heat exchanger (1) according to claim 11 or 12, **characterized in that** the openings (28) are spaced apart from each other at a distance f of 5 mm ≤ f ≤ 40 mm, preferably of 10 mm ≤ f ≤ 30 mm in longitudinal direction of the wing tube (20).

14. Heat exchanger (1) according to one of the claims 11 to 13, **characterized in that** the openings (28) are formed approximately in a rectangular, elliptical or round shape.

15. Heat exchanger (1) according to one of the claims 11 to 14, **characterized in that** the wing tube (20) consists, preferably completely, of aluminum.

16. Device, in particular a cooling device, an air conditioning device or a dehumidifier comprising a heat exchanger according to any of the preceding claims.

17. Manufacturing method of a heat exchanger (1) according to claim 1 with heating, comprising the following steps:

    a. providing a coolant conduit (20) having a first (22) and a second end (24), consisting of an electrically conductive material,
    b. arranging the coolant conduit (20) in at least one retaining clamp,
    c. providing an electrical connection to the first (22) and second end (24) of the coolant conduit (20) or to the ends of at least a section of the coolant conduit (20) to which a first switchable electric voltage source (40) is connectable, so that an electrical current flows through the coolant conduit (20), and/or
    d. providing at least one coil arrangement (50) adjacent to at least one coolant conduit (20) which is connected to a second switchable electric voltage source (42), **characterized by** the further step
    e. connecting the coolant conduit (20) by means of an insulating sleeve (60) with a coolant circuit of a device, so that the device is electrically insulated from the coolant conduit (20).

18. Manufacturing method according to claim 17, **characterized in that** a plurality of coil arrangements (50) is arranged in the heat exchanger (1).

19. Manufacturing method according to claim 17, **characterized by** the further step:
providing a plurality of openings (28) in at least one wing (26) of the wing tube (20) through which the liquid is drainable.

20. De-icing method of a heat exchanger (1) of a device, wherein the heat exchanger (1) is a heat exchanger (1) according to claim 1 which has a coolant conduit (20) of electrically conductive material, wherein the de-icing method comprises the following steps:

    a. applying a first electric voltage to a first (22) and a second end (24) of the coolant conduit (20) wherein the first (22) and the second end (24) of the coolant conduit (20) are each connected via an insulation sleeve (60) with a coolant conduit of a device in order to electrically isolate the coolant circuit of the device from the coolant conduit (20), so that an electrical current flows through the coolant conduit (20) and heats the coolant conduit, and
    b. switching off the electric voltage after a time interval, so that the coolant conduit (20) is no longer heated, and/or
    a'. applying a second electric voltage to at least one coil arrangement (50) adjacent to at least one coolant conduit (20), so that a magnetic field of the at least one coil arrangement (50) induces an electrical heating current in the at least one coolant conduit (20), and
    b'. switching off the electric voltage after a time interval so that the coolant conduit (20) is no longer heated.

21. De-icing method according to claim 20, with the further step:

    detecting an icing-up at the heat exchanger (1) by means of a sensor,

applying the electrical voltage after a certain degree of icing-up has been reached, and
switching off the electric voltage after expiration of a certain period of time or after the icing-up has fallen below a certain degree.

22. De-icing method according to the claims 20 or 21, with the further step:
thermally monitoring the coolant temperature during the heating of the coolant conduit (20) to prevent overheating of the coolant.


**Revendications**

1. Échangeur de chaleur (1) pour un appareil, présentant les caractéristiques suivantes :

    a. au moins une conduite de fluide de refroidissement (20) avec une première (22) et une deuxième extrémité (24), à travers lesquelles un fluide de refroidissement peut être guidé et laquelle est constituée d'un matériau électriquement conducteur,
    b. au moins un étrier de retenue soutenant au moins partiellement la conduite de fluide de refroidissement (20), et
    c1. une première source de tension électrique (40) apte à être reliée à la première (22) et à la deuxième extrémité (24) de la conduite de fluide de refroidissement ou aux extrémités d'au moins une section sélectionnée de la conduite de fluide de refroidissement (20), de telle façon qu'un courant de chauffage électrique circule dans la conduite de fluide de refroidissement (20), et/ou
    c2. une deuxième source de tension électrique (42) apte à être reliée à au moins un ensemble de bobine (50) adjacent à l'au moins une conduite de fluide de refroidissement (20), de telle façon qu'un courant de chauffage électrique peut être induit dans l'au moins une conduite de fluide de refroidissement (20) par un champ magnétique de l'ensemble de bobine (50), **caractérisé en ce que**
    d. la première (22) et la deuxième extrémité (24) de la conduite de fluide de refroidissement (20) sont raccordées à un circuit de fluide de refroidissement d'un appareil respectivement par le biais d'une douille d'isolation (60), afin d'isoler électriquement le circuit de fluide de refroidissement de l'appareil par rapport à la conduite de fluide de refroidissement (20).

2. Échangeur de chaleur (1) selon la revendication 1, **caractérisé en ce que** la conduite de fluide de refroidissement (20) de celui-ci est en métal et son au moins un étrier de retenue (60) est constitué d'un matériau non conducteur électriquement.

3. Échangeur de chaleur (1) selon l'une des revendications précédentes, **caractérisé en ce que** la source de tension électrique (40) de celui-ci est une source de basse tension avec une tension continue ou alternative.

4. Échangeur de chaleur (1) selon l'une des revendications précédentes, **caractérisé en ce que** la douille d'isolation (60) de celui-ci présente un corps en forme de cylindre creux (62) avec deux extrémités opposées (64), lesquelles comportent respectivement une fente annulaire (70) pour le raccordement de conduites.

5. Échangeur de chaleur (1) selon la revendication 4, **caractérisé en ce que** la fente annulaire (70) est formée par une paroi intérieure radiale (72) et par une paroi extérieure radiale (74) de la douille d'isolation (60).

6. Échangeur de chaleur (1) selon la revendication 1, **caractérisé en ce qu'**au moins deux sections de la conduite de fluide de refroidissement (20) sont reliées entre elles électriquement, de sorte que le courant de chauffage électrique peut se propager de manière correspondante.

7. Échangeur de chaleur (1) selon la revendication 1, **caractérisé en ce que** l'au moins un ensemble de bobine (50) présente une structure annulaire, laquelle entoure l'au moins une conduite de fluide de refroidissement (20).

8. Échangeur de chaleur (1) selon la revendication 1, **caractérisé en ce que** l'au moins un ensemble de bobine (50) présente une configuration plane, curviligne ou adaptée à une forme de l'échangeur de chaleur, de sorte que l'au moins un ensemble de bobine peut être disposé à proximité de l'échangeur de chaleur (1).

9. Échangeur de chaleur (1) selon la revendication 1, **caractérisé en ce que** l'au moins un ensemble de bobine (50) est relié à une commande (46), par laquelle une fréquence d'une tension d'alimentation électrique de l'au moins un ensemble de bobine (50) peut être ajustée.

**10.** Échangeur de chaleur (1) selon la revendication 1, **caractérisé en ce que** l'au moins un ensemble de bobine (50) est relié à une commande (46), laquelle contient une horloge permettant d'activer et de désactiver un champ magnétique de l'ensemble de bobine (50) en fonction du temps.

**11.** Échangeur de chaleur (1) selon la revendication 1, **caractérisé en ce que** la conduite de fluide de refroidissement (20) de celui-ci comporte un tuyau à ailettes constitué d'un tuyau (25) et d'une pluralité d'ailettes (26) faisant saillie radialement à partir de celui-ci, les ailettes (26) étant conçues de façon planaire et présentant une pluralité de percées (28) espacées les unes des autres dans la direction longitudinale du tuyau à ailettes (20).

**12.** Échangeur de chaleur (1) selon la revendication 11, **caractérisé en ce que** les percées (28) présentent une aire de section transversale $A_D$ dans la plage de $2mm^2 \leq A_D \leq 50mm^2$, de préférence de $8mm^2 \leq A_D \leq 32mm^2$.

**13.** Échangeur de chaleur (1) selon la revendication 11 ou 12, **caractérisé en ce que** les percées (28) sont espacées les unes des autres selon un intervalle f de $5mm \leq f \leq 40mm$, de préférence de $10mm \leq f \leq 30mm$, dans la direction longitudinale du tuyau à ailettes (20).

**14.** Échangeur de chaleur (1) selon l'une des revendications 11 à 13, **caractérisé en ce que** les percées (28) sont de forme approximativement rectangulaire, elliptique ou ronde.

**15.** Échangeur de chaleur (1) selon l'une des revendications 11 à 14, **caractérisé en ce que** le tuyau à ailettes (20) est constitué d'aluminium, en particulier entièrement.

**16.** Appareil, en particulier un réfrigérateur, une climatisation ou un humidificateur d'air, comprenant un échangeur de chaleur selon l'une des revendications précédentes.

**17.** Procédé de fabrication d'un échangeur de chaleur (1) selon la revendication 1 avec chauffage, comportant les étapes suivantes :

a. mise à disposition d'une conduite de fluide de refroidissement (20) avec une première (22) et une deuxième extrémité (24), laquelle est constituée d'un matériau électriquement conducteur,

b. agencement de la conduite de fluide de refroidissement (20) dans au moins un étrier de retenue,

c. mise à disposition d'une connexion électrique avec la première (22) et la deuxième extrémité (24) de la conduite de fluide de refroidissement (20) ou avec les extrémités d'au moins une section de la conduite de fluide de refroidissement (20), à laquelle une première source de tension électrique (40) apte à la mise en circuit peut être reliée, de telle façon qu'un courant électrique traverse la conduite de fluide de refroidissement (20), et/ou

d. mise à disposition d'au moins un ensemble de bobine (50) adjacent à au moins une conduite de fluide de refroidissement (20), lequel est relié à une deuxième source de tension électrique (42) apte à la mise en circuit, **caractérisé par** l'étape supplémentaire suivante

e. raccordement de la conduite de fluide de refroidissement (20) à un circuit de fluide de refroidissement d'un appareil par le biais d'une douille d'isolation (60), de manière à isoler électriquement l'appareil par rapport à la conduite de fluide de refroidissement (20).

**18.** Procédé de fabrication selon la revendication 17, **caractérisé en ce qu'**une pluralité d'ensembles de bobine (50) sont disposés dans l'échangeur de chaleur (1).

**19.** Procédé de fabrication selon la revendication 17, **caractérisé par** l'étape supplémentaire suivante :

- apport d'une pluralité de percées (28) dans au moins une ailette (26) du tuyau à ailettes (20), à travers lesquelles du liquide peut s'écouler.

**20.** Procédé de dégivrage d'un échangeur de chaleur (1) d'un appareil, dans lequel l'échangeur de chaleur (1) est un échangeur de chaleur (1) selon la revendication 1, lequel présente une conduite de fluide de refroidissement (20) constituée d'un matériau électriquement conducteur, le procédé de dégivrage présentant les étapes suivantes :

a. application d'une première tension électrique à une première (22) et une deuxième extrémité (24) de la conduite de fluide de refroidissement (20), la première (22) et la deuxième extrémité (24) de la conduite de fluide de refroidissement (20) étant reliées à un circuit de fluide de refroidissement respectivement par le biais d'une douille d'isolation (60), afin d'isoler électriquement le circuit de fluide de refroidissement de l'appareil par rapport à la conduite de fluide de refroidissement (20), de sorte qu'un courant électrique passe à travers la conduite de fluide de refroidissement (20) et chauffe la conduite de fluide de refroidissement, et

b. coupure de la tension électrique après un laps de temps, de sorte que la conduite de fluide de refroidissement (20) n'est plus chauffée, et/ou

a'. application d'une deuxième tension électrique à au moins un ensemble de bobine (50) adjacent à au moins une conduite de fluide de refroidissement (20), de telle façon qu'un champ magnétique de l'au moins un ensemble de bobine (50) induit un courant de chauffage électrique dans l'au moins une conduite de fluide de refroidissement (20), et

b'. coupure de la tension électrique après un laps de temps, de sorte que la conduite de fluide de refroidissement (20) n'est plus chauffée.

21. Procédé de dégivrage selon la revendication 20, comprenant l'étape supplémentaire suivante :

- détection d'un dégivrage au niveau de l'échangeur de chaleur (1) à l'aide d'un capteur,
- application de la tension électrique, une fois qu'un certain degré de dégivrage est atteint, et
- coupure de la tension électrique après un certain laps de temps, ou en dessous d'un certain degré de dégivrage.

22. Procédé de dégivrage selon la revendication 20 ou 21, comprenant l'étape supplémentaire suivante :

- surveillance thermique de la température du fluide de refroidissement pendant le chauffage de la conduite de fluide de refroidissement (20), afin d'éviter une surchauffe du fluide de refroidissement.

Fig. 1

Fig. 2

Fig. 3

Fig. 4

Fig. 5

Fig. 6

Fig. 7

60    64    80

84    82

70    62

Fig. 8

84    82

62    64

72    80

74    70

Fig. 9

Fig. 10

Fig. 11

Fig. 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 767050 A
- US 2428667 A
- DE 102012005513
- EP 2013051422 W